(19)

Europäisches Patentamt
European Patent Office
Office européen des brevets

(11) **EP 2 348 700 A1**

(12) **EUROPEAN PATENT APPLICATION**

(43) Date of publication:
    **27.07.2011 Bulletin 2011/30**

(51) Int Cl.:
    **H04N 1/32** (2006.01)     **H04N 5/232** (2006.01)

(21) Application number: **10170245.4**

(22) Date of filing: **21.07.2010**

(84) Designated Contracting States:
    **AL AT BE BG CH CY CZ DE DK EE ES FI FR GB
    GR HR HU IE IS IT LI LT LU LV MC MK MT NL NO
    PL PT RO SE SI SK SM TR**
    Designated Extension States:
    **BA ME RS**

(30) Priority: **26.01.2010 KR 20100006994**

(71) Applicant: **PANTECH CO., LTD.**
    **Seoul 121-792 (KR)**

(72) Inventors:
    • **Kim, Sang-Myoung**
      **Seoul (KR)**

    • **Kim, Si-Deog**
      **Gyeonggi-do (KR)**
    • **Yang, Jin-Woo**
      **Gyeonggi-do (KR)**
    • **Lee, Young-Min**
      **Gyeonggi-do (KR)**
    • **Jeong, Jin-Ho**
      **Seoul (KR)**

(74) Representative: **Herzog, Markus et al**
    **Weickmann & Weickmann**
    **Patentanwälte**
    **Postfach 86 08 20**
    **81635 München (DE)**

(54) **Mobile communication terminal and method**

(57)     A mobile communication terminal and a method are employed to select an object in an image captured by a camera, to detect information about a current position of the mobile communication terminal, information about a bearing of the object, and information about the distance between the current position of the mobile communication terminal and the object, and to calculate the position of the object based on the information. Thus, information about an object located a distance from the current position of the mobile communication terminal can be obtained using the mobile communication terminal.

```
                    START

  DISPLAY IMAGE PHOTOGRAPHED BY
  CAMERA ON DISPLAY UNIT
                                        310

  SELECT OBJECT IN DISPLAYED IMAGE
                                        320

  OBTAIN INFORMATION ABOUT CURRENT POSITION
  OF MOBILE COMMUNICATION TERMINAL USING
  POSITION CALCULATION UNIT
                                        330

  OBTAIN INFORMATION ABOUT BEARING OF OBJECT
  USING BEARING CALCULATION UNIT
                                        340

  MEASURE DISTANCE BETWEEN CURRENT POSITION
  OF MOBILE COMMUNICATION TERMINAL AND OBJECT
                                        350

  CALCULATE POSITION OF OBJECT BASED ON
  INFORMATION ABOUT CURRENT POSITION OF MOBILE
  COMMUNICATION TERMINAL, INFORMATION ABOUT
  BEARING OF OBJECT, AND DISTANCE BETWEEN
  CURRENT POSITION OF MOBILE COMMUNICATION
  TERMINAL AND OBJECT
                                        360

  OBTAIN IDENTIFICATION INFORMATION, WHICH
  CORRESPONDS TO POSITION INFORMATION OF
  OBJECT, FROM MAP INFORMATION DATABASE
                                        370

  DISPLAY APPLIED INFORMATION CORRESPONDING
  TO IDENTIFICATION INFORMATION
                                        380

                    END
```

FIG. 3

EP 2 348 700 A1

## Description

CROSS-REFERENCE TO RELATED APPLICATION

This application claims the benefit from and the benefit of a Korean Patent Application No. 10-2010-0006994, filed on January 26, 2010, which is hereby incorporated by reference for all purposes.

BACKGROUND

1. Field

The following description relates to information acquisition technology, and more particularly, to a technology for obtaining position information of an object using a mobile communication terminal.

2. Discussion of the Background

Generally, a current position of a mobile communication terminal has been determined by using a global positioning system (GPS) unit loaded on the mobile communication terminal. However, it may be useful to identify information about an object located a short distance away from the current position of the mobile communication terminal.

SUMMARY

Exemplary embodiments of the present invention provide a mobile communication terminal capable of obtaining position information of an object and a method of obtaining information about an object by using the mobile communication terminal, the mobile communication terminal and the method being employed to obtain information about an object located a distance away from the current position of the mobile communication terminal.

Additional features of the invention will be set forth in the description which follows, and in part will be apparent from the description, or may be learned by practice of the invention.

An exemplary embodiment of the present invention discloses a mobile communication terminal including a camera to capture an image; a display unit to display the image; a position calculation unit to obtain information about a position of the mobile communication terminal; a bearing calculation unit to obtain information about a bearing of an object in the image displayed on the display unit; a distance measurement unit to measure a distance between the position of the mobile communication terminal and the object; and a control unit to select the object and to calculate a position of the object based on the information about the position of the mobile communication terminal, the information about the bearing of the object, and the measured distance between the current position of the mobile communication terminal and the object.

An exemplary embodiment of the present invention discloses a method of obtaining information about an object using a mobile communication terminal, the method including displaying an image captured by a camera on a display unit of the mobile communication terminal; selecting an object in the displayed image; obtaining information about a position of the mobile communication terminal; obtaining information about a bearing of the object; measuring a distance between the position of the mobile communication terminal and the object; and calculating a position of the object based on the information about the position of the mobile communication terminal, the information about the bearing of the object, and the distance between the position of the mobile communication terminal and the object.

An exemplary embodiment of the present invention discloses a mobile communication terminal including a camera to capture an image including an object; a display unit to display the image; and a control unit to select the object and to calculate a position of the object based on information about a position of the mobile communication terminal, information about a bearing of the object, and a distance between the current position of the mobile communication terminal and the object.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram of a mobile communication terminal capable of obtaining position information of an object according to an exemplary embodiment.

FIG. 2 is a diagram illustrating a calculation of a position of an object relative to a current position of the mobile communication terminal according to an exemplary embodiment.

FIG. 3 is a flowchart illustrating a method of obtaining information about an object by using the mobile communication terminal of FIG. 1 according to an exemplary embodiment.

DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein.

Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements. Descriptions of well-known functions and constructions may be omitted to increase clarity and conciseness.

The terms used in the following description are terms defined taking into consideration the present invention, and may be changed in accordance with the option of a user or operator or a usual practice. Therefore, the definitions of these terms should be determined based on the entire content of this specification.

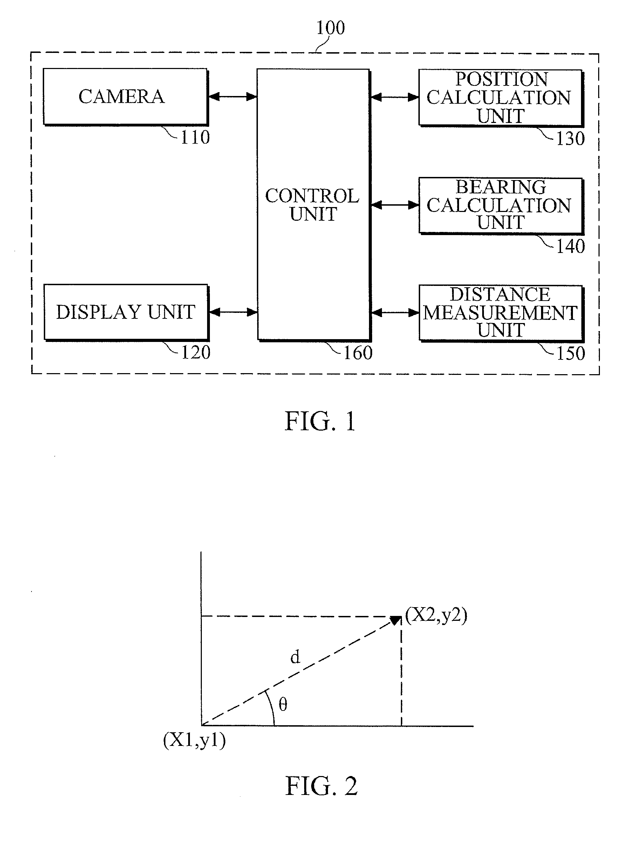

FIG. 1 is a block diagram of a mobile communication terminal 100 capable of obtaining position information of an object according to an exemplary embodiment. Referring to FIG. 1, the mobile communication terminal 100 includes a camera 110, a display unit 120, a position calculation unit 130, a bearing calculation unit 140, a distance measurement unit 150, and a control unit 160.

The camera 110 photographs or captures an image. If the mobile communication terminal 100 is in a photographing mode, the mobile communication terminal 100 may operate in a preview state in which an image is captured and displayed in real-time in a preview mode until a user presses the Confirm button to store the captured image. The image may be captured and stored as a still image or a moving image.

The display unit 120 displays an image photographed by the camera 110. If a user directs the camera 110 in the preview state to face a desired object, an image of the object and its surroundings are displayed on the display unit 120 in real-time, such as in a preview state.

The position calculation unit 130 obtains or determines information about the current position of the mobile communication terminal 100. The position calculation unit 130 may be a global positioning system (GPS) unit. Since calculating the position of the mobile communication terminal 100 using the GPS unit is known technology, a detailed description thereof will be omitted.

The bearing calculation unit 140 obtains or determines bearing information of an object contained in an image displayed on the display unit 120. Here, the bearing calculation unit 140 may calculate the bearing of the object based on information about the photographing angle of the camera 110 and information about the current position of the mobile communication terminal 100, which is obtained by the position calculation unit 130.

The bearing calculation unit 140 may be an electronic goinometer, which measures longitude; an electronic compass, which measures latitude; or a gyrosensor, which measures both longitude and latitude.

The distance measurement unit 150 measures the distance between the current position of the mobile communication terminal 100 and an object. Here, the distance measurement unit 150 may measure the distance between the current position of the mobile communication terminal 100 and the object by projecting a beam of light (e.g., an ultrasonic wave or a laser beam) onto the object and receiving the beam of light reflected by the object. If a time at which the distance measurement unit 150 projects the beam of light onto an object and a time at which the distance measurement unit 150 receives the beam of light reflected by the object are measured, the distance between the current position of the mobile communication terminal 100 and the object can be determined by Equation (1) below.

Equation (1)

$$d = c(t2 - t1) / 2$$

in which d is the distance between the current position of the mobile communication terminal 100 and an object, c is the propagation speed of a beam of light, t1 is a time at which the beam of light is projected onto the object, and t2 is a time at which the beam of light reflected by the object is received.

The control unit 160 selects an object and calculates the position of the object based on information about the current position of the mobile communication terminal 100, which is obtained by the position calculation unit 130; information about the bearing of the object, which is obtained by the bearing calculation unit 140; and information about the distance between the current position of the mobile communication terminal 100 and the object, which is obtained by the distance measurement unit 150.

If the display unit 120 is a touch screen, the control unit 160 may select an object in an image displayed on the touch screen by sensing a touch at a position on the touch screen corresponding to the object. Alternatively, the control unit 160 may select an object based on a focal position of an image displayed on the display unit 120.

Once the current position of the mobile communication terminal 100, the bearing of an object, and the distance between the current position of the mobile communication terminal 100 and the object are identified, the position of the object can be calculated using trigonometry.

FIG. 2 is a diagram illustrating a calculation of a position of an object relative to a current position of the mobile communication terminal 100 according to an exemplary embodiment. Referring to FIG. 2, the current position of the mobile communication terminal 100 may be (x1, y1), a bearing angle to an object may be θ, and the distance between the current position of the mobile communication terminal 100 and the object may be d. In this case, the position (x2, y2) of the object may be given by Equations (2) and (3).

Equation (2)

$$\cos\theta = (x2 - x1) / d,$$

Equation (3)

$$\sin\theta = (y2 - y1) / d$$

Since Equations (2) and (3) can respectively be transposed to x2 = x1 + $dcos\theta$ and y2 = y1 + $dsin\theta$ the position (x2, y2) of the object is (x1 + dcosθ, y1 + dsinθ).

An object is selected in an image photographed by the camera 110, information about the current position of the mobile communication terminal 100, information about the bearing of the object, and information about the distance between the current position of the mobile communication terminal 100 and the object are detected or determined, and the position of the object is calculated based on the information. In this way, information about an object located a distance from the current position of the mobile communication terminal 100 can be determined using the mobile communication terminal 100.

The control unit 160 may obtain identification information of an object, which corresponds to information about the calculated position of the object, from a map information database. The map information database may be stored in a built-in memory (not shown) of the mobile communication terminal 100 and may be periodically or non-periodically updated by a server (not shown). Alternatively, the map information database may be received from the server in real-time.

Identification information of an object, which corresponds to position information thereof, is recorded in the map information database of a geographic information system (GIS) (not shown). In the current example, the control unit 160 retrieves identification information of an object, which corresponds to information about the calculated position of the object, from the map information database and identifies the object based on the retrieved identification information.

The control unit 160 may control display of applied information which corresponds to identification information of an object. Examples of the applied information include navigation information regarding the object, information about facilities of the object and how to use the facilities, and advertisement information related to the object.

Identification information of an object, which corresponds to position information thereof, is stored in the map information database of the GIS. By extension, various applied information may correspond to each piece of identification information.

In the current example, the control unit 160 retrieves identification information of an object, which corresponds to information about the calculated position of the object, and applied information, which corresponds to the identification information of the object, from the map information database and controls the display unit 120 of the mobile communication terminal 100 to display the applied information which corresponds to the identification information.

Thus, a user may obtain various applied information about an object located a distance away from the current position of the mobile communication terminal 100 by using the mobile communication terminal 100. For example, the user can easily obtain navigation information including the object information about facilities of the object and how to use the facilities, or advertisement information related to the object.

The control unit 160 may control the distance measurement unit 150 to rotate to an angle and a bearing which correspond respectively to information about the photographing angle of the camera 110 and information about the bearing of an object, which are obtained or determined by the bearing calculation unit 140.

The distance measurement unit 150 may be installed on the mobile communication terminal 100 to be rotatable, and the control unit 160 may control the distance measurement unit 150 to rotate to an angle and a bearing which correspond respectively to information about the photographing angle of the camera 110 and information about the bearing of an object, which are obtained or determined by the bearing calculation unit 140.

Thus, if a desired object is selected from a plurality of objects in an image displayed on the display unit 120 of the mobile communication terminal 100 in order to find out position information of the selected object, the control unit 160 may automatically rotate the distance measurement unit 150 such that the distance measurement unit 150 can project a beam of light in the direction of the selected object.

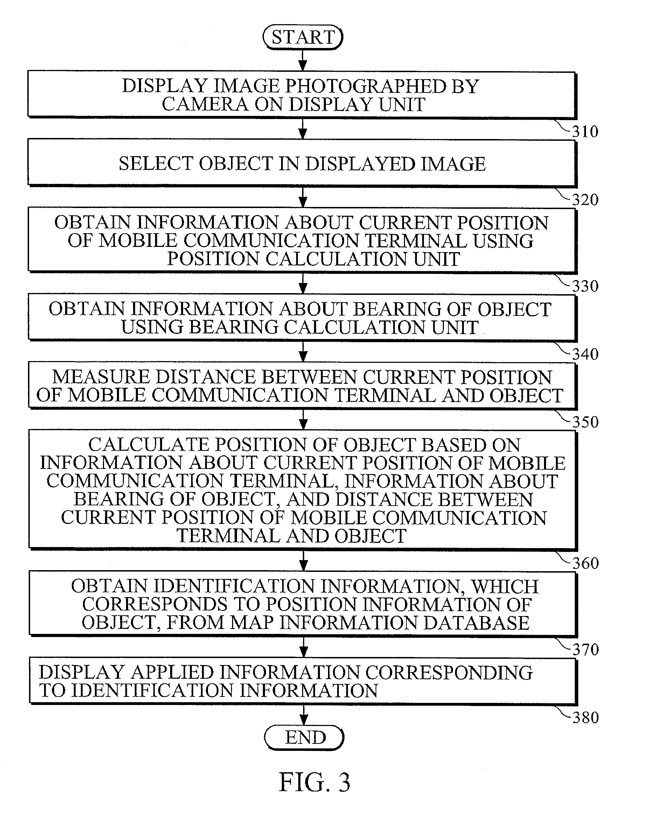

FIG. 3 is a flowchart illustrating a method of obtaining information about an object by using the mobile communication terminal 100 of FIG. 1 according to an exemplary embodiment. Referring to FIG. 3, the mobile communication terminal 100 displays an image photographed by the camera 110 on the display unit 120 (operation 310). The mobile communication terminal 100 may be in a preview state such that the image need not be stored but may be displayed in real-time by the display unit 120.

Then, the mobile communication terminal 100 selects an object in the image which is displayed on the display unit 120 in operation 310 (operation 320).

In operation 320, the mobile communication terminal 100 may select the object in the image displayed on the display unit 120 by sensing a touch inputted to a touch screen of the mobile communication terminal 100. Alternatively, the mobile communication terminal 100 may select the object based on a focal position of the image displayed on the display unit 120, or upon another selection mechanism, such as a moveable selection icon on the display unit 120.

After selecting the object in operation 320, the mobile communication terminal 100 obtains information about the current position of the object using the position calculation unit 130 (operation 330).

Next, after obtaining the information about the current position of the object in operation 330, the mobile communication terminal 100 obtains information about the bearing of the object using the bearing calculation unit 140 (operation 340).

In operation 340, the bearing calculation unit 140 may calculate the bearing of the object based on information about the photographing angle of the camera 110 and the information about the current position of the mobile communication terminal 100, which is obtained by the position calculation unit 130 in operation 330.

After obtaining the information about the bearing of the object in operation 340, the mobile communication terminal 100 measures the distance between its current position and the object using the distance measurement unit 150 in operation 350.

In operation 350, the distance measurement unit 150 may measure the distance between the current position of the mobile communication terminal 100 and the object by projecting a beam of light onto the object and receiving the beam of light reflected by the object as described above.

Next, in operation 360, the mobile communication terminal 100 calculates the position of the object based on the information about the current position of the mobile communication terminal 100, which is obtained in operation 330; the information about the bearing of the object, which is obtained in operation 340; and the distance between the current position of the mobile communication terminal 100 and the object, which is measured in operation 350 as described above. Although operations 330, 340, and 350 have been described in a specific order, this order may be modified in any way such that the information determined in operation 330, the information determined in operation 340, and the distance measured in operation 350 are acquired before the calculation is performed in operation 360.

As described above, an object is selected in an image photographed by a camera, information about the current position of a mobile communication terminal, information about the bearing of the object, and information about the distance between the current position of the mobile communication terminal and the object are detected or determined, and the position of the object is calculated based on the information. In this way, information about an object located a distance from the current position of the mobile communication terminal can be obtained using the mobile communication terminal.

The method of obtaining information about an object by using the mobile communication terminal 100 of FIG. 1 may further include operation 370 in which the mobile communication terminal 100 obtains identification information of the object, which corresponds to the position of the object calculated in operation 360, from a map information database.

Here, the map information database may be stored in a built-in memory (not shown) of the mobile communication terminal 100 and may be periodically or non-periodically updated, such as by connecting and downloading the updated information from a server (not shown). Alternatively, the map information database may be received from the server in real-time.

Identification information of an object, which corresponds to position information thereof, is recorded in the map information database of a a geographic information system (GIS). In operation 370, the mobile communication terminal 100 retrieves identification information, which corresponds to the position of the object calculated in operation 360, from the map information database and identifies the object based on the retrieved identification information.

The method of obtaining information about an object by using the mobile communication terminal 100 of FIG. 1 may further include operation 380 in which the mobile communication terminal 100 displays the applied information, which corresponds to the identification information obtained in operation 370.

Examples of the applied information include navigation information regarding the object, information about facilities of the object and how to use the facilities, and advertisement information related to the object. Identification information of an object, which corresponds to position information thereof, is stored in the map information database of the GIS. By extension, various applied information may correspond to each piece of identification information.

In operation 380, the mobile communication terminal 100 retrieves applied information, which corresponds to the identification information obtained in operation 370, from the map information database and displays the applied information, which corresponds to the identification information, on the display unit 120. Accordingly, a user can be provided with various applied information.

That is, a user can obtain various applied information about an object located a distance away from the current position of the mobile communication terminal 100 by using the mobile communication terminal 100. For example, the user can obtain navigation information regarding the object, information about facilities of the object and how to use the facilities, or advertisement information related to the object.

As described above, an object is selected in an image photographed by a camera, information about the current position of a mobile communication terminal, information about the bearing of the object, and information about the distance between the current position of the mobile communication terminal and the object are detected or determined, and the position of the object is calculated based on the information. In this way, information about an object located a distance from the current position of the mobile communication terminal can be obtained using the mobile communication terminal.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A mobile communication terminal and a method are employed to select an object in an image captured by a camera, to detect information about a current position of the mobile communication terminal, information about a bearing of the object, and information about the distance between the current position of the mobile communication terminal and the object, and to calculate the position of the object based on the information. Thus, information about an object located a distance from the current position of the mobile communication terminal can be obtained using the mobile communication terminal.

## Claims

1.  A mobile communication terminal, comprising:

    a camera to capture an image including an object;
    a display unit to display the image; and
    a control unit to select the object and to calculate a position of the object based on information about a position of the mobile communication terminal, information about a bearing of the object, and a distance between the position of the mobile communication terminal and the object.

2.  The mobile communication terminal of claim 1, further comprising:

    a position calculation unit to obtain information about the current position of the mobile communication terminal;
    a bearing calculation unit to obtain information about the bearing of the object in the image; and
    a distance measurement unit to measure the distance between the position of the mobile communication terminal and the object.

3.  The mobile communication terminal of claim 2, wherein the distance measurement unit projects a beam of light onto the object and receives the beam of light reflected by the object to measure the distance between the position of the mobile communication terminal and the object,
    the distance measurement unit preferably rotating to an angle and a bearing which correspond respectively to the information about the photographing angle of the camera and the information about the bearing of the object.

4.  The mobile communication terminal of claim 2 or 3, wherein the bearing calculation unit calculates the bearing of the object based on information about a photographing angle of the camera and the information about the position of the mobile communication terminal.

5.  The mobile communication terminal of any of claims 2 to 4, wherein the display unit comprises a touch screen, and the control unit selects the object by sensing a touch on the touch screen.

6.  The mobile communication terminal of any of claims 2 to 5, wherein the control unit selects the object based on a focal position of the image displayed on the display unit.

7.  The mobile communication terminal of any of claims 2 to 6, wherein the control unit obtains identification information of the object, which corresponds to information about the calculated position of the object, from a map information database,
    the map information database preferably either being stored in a memory of the mobile communication terminal and is periodically or non-periodically updated by a server or being received from the server in real-time.

8.  The mobile communication terminal of claim 7, wherein the display unit displays applied information, which corresponds to the identification information of the object, the applied information preferably being at least of of the following:

    - navigation information regarding the object,
    - information about facilities of the object and how to use the facilities,
    - advertisement information related to the object.

9.  A method of obtaining information about an object using a mobile communication terminal, the method comprising:

    displaying an image captured by a camera on a display unit of the mobile communication terminal;
    selecting an object in the displayed image;
    obtaining information about a position of the mobile communication terminal;
    obtaining information about a bearing of the object;
    measuring a distance between a position of the mobile communication terminal and the object; and

calculating a position of the object based on the information about the position of the mobile communication terminal, the information about the bearing of the object, and the distance between the position of the mobile communication terminal and the object.

10. The method of claim 9, wherein the measuring of the distance between the position of the mobile communication terminal and the object further comprises: projecting a beam of light onto the object and receiving the beam of light reflected by the object.

11. The method of claim 9 or 10, wherein the obtaining of the information about the bearing of the object further comprises: calculating the bearing of the object based on information about a photographing angle of the camera and the information about the position of the mobile communication terminal.

12. The method of any of claims 9 to 11, wherein the selecting of the object further comprises sensing a touch on a touch screen of the mobile communication terminal.

13. The method of any of claims 9 to 12, wherein the selecting of the object further comprises selecting the object based on a focal position of the image displayed on the display unit.

14. The method of any of claims 9 to 13, further comprising obtaining identification information of the object, which corresponds to information about the position of the object, from a map information database.

15. The method of claim 14, further comprising displaying applied information which corresponds to the identification information of the object, the applied information preferably including at least one of the following:

- navigation information regarding the object,
- information about facilities of the object and how to use the facilities,
- advertisement information related to the object.

FIG. 1

FIG. 2

START

DISPLAY IMAGE PHOTOGRAPHED BY
CAMERA ON DISPLAY UNIT
〜310

SELECT OBJECT IN DISPLAYED IMAGE
〜320

OBTAIN INFORMATION ABOUT CURRENT POSITION
OF MOBILE COMMUNICATION TERMINAL USING
POSITION CALCULATION UNIT
〜330

OBTAIN INFORMATION ABOUT BEARING OF OBJECT
USING BEARING CALCULATION UNIT
〜340

MEASURE DISTANCE BETWEEN CURRENT POSITION
OF MOBILE COMMUNICATION TERMINAL AND OBJECT
〜350

CALCULATE POSITION OF OBJECT BASED ON
INFORMATION ABOUT CURRENT POSITION OF MOBILE
COMMUNICATION TERMINAL, INFORMATION ABOUT
BEARING OF OBJECT, AND DISTANCE BETWEEN
CURRENT POSITION OF MOBILE COMMUNICATION
TERMINAL AND OBJECT
〜360

OBTAIN IDENTIFICATION INFORMATION, WHICH
CORRESPONDS TO POSITION INFORMATION OF
OBJECT, FROM MAP INFORMATION DATABASE
〜370

DISPLAY APPLIED INFORMATION CORRESPONDING
TO IDENTIFICATION INFORMATION
〜380

END

FIG. 3

Europäisches
Patentamt

European
Patent Office

Office européen
des brevets

# EUROPEAN SEARCH REPORT

Application Number

EP 10 17 0245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 657 666 B1 (IMAGAWA SEIJI [JP] ET AL) 2 December 2003 (2003-12-02) * abstract * * column 4, line 51 - column 5, line 43 * * column 6, lines 3-5 * * column 7, lines 48-50 * * column 9, lines 21-23 * * claim 1 * ----- | 1-15 | INV. H04N1/32 H04N5/232 |
| X | EP 1 924 083 A2 (FUNAI ELECTRIC CO [JP]) 21 May 2008 (2008-05-21) * abstract * * paragraphs [0016], [0-18], [0024] - [0028], [0036] - [0038], [0043] * ----- | 1,2,4, 7-9,11, 14,15 | |
| X | US 2005/046706 A1 (SESEK ROBERT [US] ET AL) 3 March 2005 (2005-03-03) * abstract * * paragraphs [0024], [0025] * ----- | 1-4,9-11 | |
| X | EP 0 867 690 A1 (NIPPON TELEGRAPH & TELEPHONE [JP]) 30 September 1998 (1998-09-30) * abstract * * figures 3,12 * ----- | 1,2,4, 6-9,11, 13-15 | **TECHNICAL FIELDS SEARCHED (IPC)** H04N |
| X | US 7 557 736 B1 (DAILY MICHAEL J [US] ET AL) 7 July 2009 (2009-07-07) * abstract * ----- | 1,2,4, 7-9,11, 14,15 | |
| Y | US 2009/262230 A1 (SUGIURA MAMORU [JP]) 22 October 2009 (2009-10-22) * paragraphs [0058], [0127], [0131] * ----- | 5,12 | |

-/--

The present search report has been drawn up for all claims

| Place of search | Date of completion of the search | Examiner |
|---|---|---|
| Berlin | 9 June 2011 | Roche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 17 0245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 101 567 975 A (SHENZHEN HUAWEI MOBILE COMM [CN]) 28 October 2009 (2009-10-28) * abstract * ----- | 5,12 | |
| A | US 5 913 078 A (KIMURA YOSHIAKI [JP] ET AL) 15 June 1999 (1999-06-15) * the whole document * ----- | 1-15 | |
| A | US 2008/147730 A1 (LEE YONG C [US] ET AL) 19 June 2008 (2008-06-19) * the whole document * ----- | 1-15 | |
| A | EP 1 246 080 A2 (ECOLE POLYTECH [CH]) 2 October 2002 (2002-10-02) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Berlin | 9 June 2011 | Roche, Nicolas |

EPO FORM 1503 03.82 (P04C01)

## ANNEX TO THE EUROPEAN SEARCH REPORT
## ON EUROPEAN PATENT APPLICATION NO.

EP 10 17 0245

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2011

| Patent document cited in search report | | Publication date | Patent family member(s) | | Publication date |
|---|---|---|---|---|---|
| US 6657666 | B1 | 02-12-2003 | CN | 1240297 A | 05-01-2000 |
| | | | JP | 4296451 B2 | 15-07-2009 |
| | | | JP | 2000013722 A | 14-01-2000 |
| EP 1924083 | A2 | 21-05-2008 | JP | 2008131217 A | 05-06-2008 |
| | | | US | 2008174679 A1 | 24-07-2008 |
| US 2005046706 | A1 | 03-03-2005 | NONE | | |
| EP 0867690 | A1 | 30-09-1998 | CN | 1203369 A | 30-12-1998 |
| | | | DE | 69818889 D1 | 20-11-2003 |
| | | | DE | 69818889 T2 | 09-09-2004 |
| | | | US | 6222583 B1 | 24-04-2001 |
| US 7557736 | B1 | 07-07-2009 | NONE | | |
| US 2009262230 | A1 | 22-10-2009 | JP | 4561919 B2 | 13-10-2010 |
| | | | JP | 2009284462 A | 03-12-2009 |
| CN 101567975 | A | 28-10-2009 | NONE | | |
| US 5913078 | A | 15-06-1999 | NONE | | |
| US 2008147730 | A1 | 19-06-2008 | WO | 2008076526 A1 | 26-06-2008 |
| EP 1246080 | A2 | 02-10-2002 | AT | 467189 T | 15-05-2010 |
| | | | EP | 2207113 A1 | 14-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100006994